# EUROPEAN PATENT SPECIFICATION

(11) **EP 1 708 579 B1**
(45) Date of publication and mention of the grant of the patent: **12.11.2008**
(21) Application number: 05700766.8
(22) Date of filing: 06.01.2005
(51) Int. Cl.: A23L 1/30, A23C 11/00, A23L 1/39, A23L 1/19, A23L 2/39, A23F 3/00, A23F 5/00, A23G 1/00

(54) **PARTICULATE COMPRISING PHYTOSTEROLS AND FOOD COMPOSITIONS COMPRISING SAID CREAMER**
TEILCHENFÖRMIGES PRODUKT, DAS PHYTOSTEROLE ENTHÄLT, SOWIE NAHRUNGSMITTELZUSAMMENSETZUNGEN, DIE DIESES WEISSMITTEL ENTHALTEN
PARTICULES COMPRENANT DES PHYTOSTEROLES ET PRODUITS ALIMENTAIRES LES COMPRENANT

(30) Priority: 30.01.2004 EP 04075306; 20.08.2004 EP 04077352
(43) Date of publication of application: 11.10.2006
(73) Proprietor: Unilever N.V., 3013 AL Rotterdam (NL); Unilever PLC, London Greater London EC4P 4BQ (GB)
(72) Inventor: VELDHUIZEN, Y.S.J. c/o Unilever R & D Vlaardingen, NL-3133 ATVlaardingen (NL); WEISBECKER, R. T.; c/o Unilever Bestfoods De Gmbh, 74074 Heilbronn (DE)
(74) Representative: Joppe, Hermina Laura Petronella
(86) International application number: PCT/EP2005/000117
(87) International publication number: WO 2005/074717

(56) References cited:
- EP-A- 0 897 671
- EP-A- 1 212 945
- EP-A- 1 419 698
- WO-A-00/33669
- WO-A-02/17892
- WO-A-98/58554
- WO-A-20/04014141
- US-A- 3 881 005
- US-A- 6 129 944
- US-B1- 6 491 952
- DATABASE WPI Section Ch, Week 198123 Derwent Publications Ltd., London, GB; Class D13, AN 1981-41212D XP002285302 & JP 56 042546 A (NISSHIN OIL MILLS LTD) 20 April 1981 (1981-04-20)

## Description

### Field of the invention

The present invention relates to particulate compositions suitable for use as creamer and/or whitener, and in particular such compositions being low in trans-fatty acids or triglycerides thereof. The invention further relates to a process for manufacturing such compositions and food products containing such creamer and/or whitener.

### Background of the invention

Food compositions, and in particular savoury food compositions, contain in many cases fat. This is especially the case for particulate and/or pasty compositions like preparations for instant cream-style soups and sauces, which to a large extent consist of fat, starch or a starchy matter, and salt and flavourings. Particulate in this context is to be understood as powder, flakes, cubes, pellets etcetera (i.e. non fluid).

(Mixtures for) cream-style soups and sauces as above referred, but also other products such as instant dishes like pasta with a sauce or wet soups and sauces often contain an ingredient which is referred to as a creamer, and/or creamer/whitener, and/or creamer/thickener. These products usually contain fat blends that can provide a creamy taste and/or mouthfeel and/or improved body and/or viscosity and/or a whitening effect. Such products, which are herein after called creamers for brevity, can also be in the form of e.g. tablets. Creamers are also known for application in (compositions for preparing) drinks such as tea, coffee, including variants such as cappuccino, Wiener melange, café-au-lait, etcetera, cocoa drinks, milk shakes, (soy)milk, etcetera, also to provide a creaming and/or whitening effect. Often, but not always, such drinks are offered as dry, instant compositions. The creamer can be part of such composition, or may be offered separately for application in such drinks. To be suitable in these applications the fat blends in the creamer must have the appropriate physical properties in terms of melting behaviour, crystallisation behaviour, brittleness, organoleptic properties, taste, as well as physical and chemical stability. In order to increase stability, shelf life and solubility, and to give proper creaming or whitening behaviour the fat blends are commonly encapsulated or at least partly coated with or dispersed in another material, e.g. hydrophilic film forming materials. In such encapsulates, dispersions or partly coated fats, the individual fat blend particles as well as clusters of fat blend particles are at least partially covered and/or surrounded by and/or dispersed in the encapsulation or matrix material. The fat blends should therefore also be suitable for being submitted to encapsulation and drying processes in order to form free flowing and highly dispersible products. The covering, encapsulation or matrix material often contributes to the properties of the creamer.

The fats in the compositions described above usually comprise a considerable amount of triglycerides of fatty acids (hereinafter for short: triglycerides). The fats used are usually mixtures of various triglycerides. The type of fat or fat blend used for a given purpose is determined (next to availability and price) by e.g. the properties the fat has and how it performs in a given product, and in the manufacture of such product. The fat should perform well on e.g. taste, melting in the mouth, taste keepability, but also on ability to be processed into a suitable product as well as performance in the packed product, e.g. keepability (in particular fat staining for bouillon cubes packaged in cardboard).

The triglycerides (which form part or all of the fat) are usually obtained from vegetable sources and may have been subjected to various treatments, such as fractionation (dry or wet), purification, hardening, interesterification, blending etcetera, to give the fat the desired product properties. Hardening unsaturated fat or triglycerides to saturated or partially unsaturated fat or triglycerides is in particular a tool used to obtain the desired melting behaviour. In this way, oils or soft fats can be turned into fats showing more suitable properties for solid or dry formulations.

The hardening process (in particular partial hardening) may lead to formation of a certain amount of so-called trans-unsaturated fatty acids (and/or triglycerides containing such trans-unsaturated fatty acids as acyl moiety), in short TFA's. For various reasons it may be desired to reduce or eliminate the amount of trans-unsaturated fatty acids (and triglycerides thereof) in products. For spreads (margarines and the like) a wide range of possible alternative fats and triglycerides are proposed, as is disclosed in e.g. WO 97/16978 and WO 96/39855.

The triglycerides mentioned in such applications frequently contain lauric acid (C12 saturated fatty acid). It has been found that when one wishes to find an alternative for the trans-unsaturated fatty acids (and fats containing them) in savoury-type food applications (in which the creamers are often used) lauric acid (and its triglycerides) is undesired. Lauric acid and triglycerides containing lauric acid may show a range of desirable properties, in particular melting behaviour, but also have disadvantages, such as e.g. in a savoury food application triglycerides of lauric acid were found to lead to a (soapy) off-flavour, especially after prolonged storage.

Hence, there is a desire for creamer, and/or creamer/whitener, and/or creamer/thickener, and also food compositions such as (mixtures for) cream-style soups and sauces, (instant) food compositions, meal makers as well as drinks such as tea, coffee, cocoa drinks, milkshakes, milk, (soy)milk, fruit juices, fruit smoothies, etcetera (including compositions for preparing such drinks) and others that contain such creamer, or creamer/whitener, and/or creamer/thickener, wherein the creamer, and/or creamer/whitener, and/or creamer/thickener, containing fatty matter which is low in trans-unsaturated fatty acids (e.g. below 5% of the total fats present, preferably less than 2%, more preferably less than 1%). Still such creamer, and/or creamer/whitener, and/or creamer/thickener should be not too difficult to manufacture and process in comparison to the conventional products, and should still perform well in the food compositions indicated (e.g. comprising carbohydrates), in particular concerning processability, fat staining, crystallisation, mouthfeel, taste and other characteristics as mentioned above. Furthermore the creamer should have a good taste and/or mouthfeel and/or cooking behaviour, more preferably similar to the creamers based on conventionally used triglycerides.

Preferably, such product should also be low in lauric acid or triglycerides thereof (e.g. below 10% of the total fatty matter present, preferably less than 3%, most preferably less than 0.5% wt of the total fatty matter present). Also, the alternative fatty matter should combine well with the coating /encapsulation/matrix material. Suitable encapsulation or matrix material for the creamers according to the invention are edible proteins such as for example milk proteins, hydrolysed proteins or edible carbohydrates, such as for example starch or modified starches as well as sugars (incl. e.g. glucose, sucrose, fructose, lactose), sugar syrups or sugar derivatives, dextrines or maltodextrines etcetera; or mixtures of any of these. The creamers in the form of encapsulated or covered fatty matter usually contain 10-95%, preferably 20-90% wt of encapsulation or matrix material, based on the total creamer.

EP 1038444 discloses hard butter compositions for use in chocolate, wherein said hard butter component comprises 50-80% SUS triglycerides (S being C16 and C18 saturated fatty acids, U being C16 and C18 unsaturated acids) and is free from trans acids and lauric acids.

US 5,858,427 discloses compositions for use as coatings on ice creams, said compositions comprising 20-60% sugar, 20-70% fat, 0-30% protein. The fat is preferably low in trans unsaturated fatty acids and contains 25-80% SUS (S being saturated fatty acids of 16-24 carbon atoms, U being unsaturated acids of 18 or more carbon atoms), and the fat has a specified melting behaviour (No of 40-80, N₂₀ of 15-60, N₂₅ of 2-20). The compositions can be made by mixing all ingredients.

EP 545463 discloses a fat blend for confectionery (chocolate) not needing tempering, which fat blend is low in trans fatty acids, and which blend comprises more than 50% SUS (S being saturated fatty acids of 16-24 carbon atoms, U being C18:1 and C18:2) and less than 30% S'OS' (S' being saturated fatty acids of 16-18 carbon atoms, O being C18:1).

US 5,939,114 discloses ice cream coating compositions with reduced waxiness and a low content of trans unsaturated fatty acids, wherein the fat composition contains less than 10% SSS, 25-80% SUS, 2-20% SSU, 8-60% SUU and USU, less than 10% UUU (S being saturated fatty acids of 16-24 carbon atoms, U being unsaturated acids of 18 or more carbon atoms). The coating composition may contain (next to 20-70% of said fat) the usual ingredients for such compositions: 25-60% sugar, and 0-30% cocoa powder, milk proteins, flavours and emulsifiers. The compositions can be made by mixing all ingredients.

WO 98/58554 relates to a premix useful in food industry, the premix containing a pulverized plant sterol and a conventional foodstuff raw material. The invention further relates to methods for the manufacture of the premix, to the use of the premix as such and in the manufacture of foodstuffs, and to edible products containing the premix. Bakery products containing the premix are described in particular.

US 6129944 relates to a microcrystalline plant sterol that can be added to food and is better soluble than conventional sterols. It further relates to a method for producing the products by pulverization and use of the product for the manufacture of edible products. Preferably the product is a spread based on a combination of a sweetening agent, a microcrystalline plant sterol and suitable berry or fruit.

WO 02/17892 describes a method of manufacturing encapsulated forms of sterols which are water-dispersible, and to the encapsulated sterol powders themselves. It further relates to the use of encapsulated phytosterols in the preparation of pharmaceutical or nutritional products, including food products and beverages, and the medical applications of such products.

US 3881005 relates to a method to make a dispersible powder comprising sitosterols and a pharmaceutical preparation comprising the dispersible powder in water.

WO 2004/014141 relates to the use of sterols as an enhancer of creaminess in a food comprising dairy product or a derivative or analogue thereof.

EP 1419698 discloses particulate compositions comprising 10-90%wt of triglycerides of fatty acids, which particulates are at least partly covered or encapsulated by 10-90%wt of an encapsulating or covering material, wherein the amount of H3 (triglyceride of 3 saturated fatty acids of 16 or more carbon atoms) and H2U (triglyceride of 2 saturated fatty acids of 16 or more carbon atoms and 1 cis-unsaturated fatty acid) taken together is at least 55%wt based on the total amount of triglycerides, wherein the compositions are low in triglycerides of transunsaturated fatty acids, for use as for example creamer and/or whitener. The invention further relates to food products containing such creamer.

### Summary of the invention

It has now been found that the objectives as given above may be met at least in part by particulates comprising 10-95% wt (preferably 20-90%) of a matrix material and 5-90% wt (preferably 10-80% wt) of fatty matter essentially dispersed in the matrix, wherein said fatty matter comprises 5-100% wt on fatty matter (preferably 20-80% wt) one or more phytosterols as defined below, and wherein the matrix comprises a protein and a carbohydrate, and wherein the amount of phytosterols is at least 1 wt% on the total weight of the particulates.

### Detailed description

In the particulates according to the invention the fatty matter is essentially dispersed in the matrix material, preferably as discrete regions. More preferably, the fatty matter is dispersed in the matrix material as oily or fatty matter droplets, crystals or particles. As an alternative or more specific embodiment, the fatty matter is preferably present as oily or fatty matter droplets or crystals which droplets or crystals are at least partly covered by or encapsulated with the matrix material.

In the context of the invention "essentially dispersed" means that at least 50% of the fatty matter is dispersed in the matrix material. This can be identified by using microscopic techniques. Preferably at least 60%, more preferred from 70 to 100 wt% of the fatty matter is dispersed in the matrix material.

Phytosterols herein, also known as plant sterols or vegetable sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188. The respective 5 alpha- saturated derivatives such as sitostanol, campestanol and ergostanol and their derivatives are also encompassed in the term phytosterol. Preferably the phytosterol is selected from the group comprising fatty acid ester of β-sitosterol, β-sitostanol, campesterol, campestanol, stigmasterol, brassicasterol, brassicastanol or a mixture thereof.

Creamers comprising a sterol are for examples disclosed in JP 56 042546 (Nishin oil mills limited). Furthermore EP-A-897671 discloses the general use of sterols in compositions such as powdered non-dairy coffee-whiteners, milk shake mixes and instant milks.

The phytosterols in this preferred embodiment are preferably esterified with a fatty acid. Preferably the sterols are esterified with one or more C2-22 fatty acids. For the purpose of the invention the term C2-22 fatty acid refers to any molecule comprising a C2-22 main chain and at least one acid group. Although not preferred within the present context the C2-22 main chain may be partially substituted or side chains may be present. Preferably, however the C2-22 fatty acids are linear molecules comprising one or two acid group(s) as end group(s). Most preferred are linear C8-22 fatty acids as occur in natural oils. Suitable examples of any such fatty acids are acetic acid, propionic acid, butyric acid, caproic acid, caprylic acid, capric acid. Other suitable acids are for example citric acid, lactic acid, oxalic acid and maleic acid. Most preferred are myristic acid, lauric acid, palmitic acid, stearic acid, arachidic acid, behenic acid, oleic acid, cetoleic acid, erucic acid, elaidic acid, linoleic acid and linolenic acid. When desired a mixture of fatty acids may be used for esterification of the sterols. For example, it is possible to use a naturally occurring fat or oil as a source of the fatty acid and to carry out the esterification via an interesterification reaction. Use of a natural source nearly always results in a mixture of fatty acids. In a particular embodiment, the fatty acid mixture contains a high amount (>50%, preferably >70%, further preferred >80%) of unsaturates, whether monounsaturated fatty acids (MUFA) and/or polyunsaturated fatty acids (PUFA). This does not only provide the advantage of e.g. PUFA itself having good blood cholesterol lowering capacity, but also of the sterols esters prepared with such fatty acids and thus the creamer/whitener/thickener prepared with it. Preferably fatty acid mixtures of sunflower, safflower, rapeseed, linseed, olive oil, linola and/or soybean are used. These are typical sources of high PUFA and/or low SAFA. Suitable esterification conditions are for example described in WO 92/19640.

The particultes comprise at least 1 wt% phytosterol on total weight of the particles, calculated as free sterol equivalent weight. Preferably the particulates comprise from 5 to 80 wt%, more preferred from 5 to 60 wt%, even more preferred from 10 to 40 wt%, most preferred from 10 to 30 wt% phytosterol, calculated as free sterol equivalent weight, on total weight of the particulates.

In a most preferred embodiment, the particulates comprise from 10 to 40 wt% of a phytosterol fatty acid esters, calculated as weight of the phytosterol ester on total weight of the particles.

The matrix material comprises at least a protein and a carbohydrate, preferably in a ratio by weight protein : carbohydrate of between 1 : 0.2 and 1 : 20. Preferred proteins for the purpose of the invention are dairy protein, hydrolysed protein, gelatin, soy protein, or mixtures thereof, with dairy proteins (e.g. whey protein or caseinate) being most preferred. Suitable carbohydrates in the present invention are maltodextrin, sugar, including e.g. glucose, sucrose, fructose, lactose; sugar derivatives (e.g. polyols), starch, including starch hydrolysates such as maltodextrin, flour, chemically modified starch, physically modified starch, xanthan, guar, locust bean gum, alginate, pectin, carrageenan, polydextrose, or mixtures thereof. Also preferred as matrix material may be dairy products like liquid and/or powdered (skim) milk or cream.

In the present invention it is preferred that at least 60% by weight of the particulates (i.e. oily and fatty matter plus matrix material) has a size of 1-1000 µm, preferably 10-600 µm. It is also preferred that at least 60% by weight of the oily or fatty matter droplets, crystals or particles has a size of 0.05-100 µm, preferably 0.1-20 µm.

The particulates according to the invention are often "dry" preparations. However, such compositions still may contain a considerable amount of water, e.g. as a result of an incomplete dehydration process or as a result from water naturally present in the constituents, such as moisture in flour. The amount of moisture present in the compositions according to the invention is preferably below 30% wt (based on the total composition), more preferably less than 20% wt, most preferably less than 10%wt, even more preferred less than 5 wt%.

Hence, it is now possible to manufacture e.g. creamer and/or whitener type products which contain a large proportion of vegetable fats, wherein the fats contain less than 5%, preferably less than 2%, more preferably less than 1% wt of trans-unsaturated fatty acids (as triglycerides), and preferably having less than 10% wt (more preferably less than 3%, most preferably less than 0.5%) of triglycerides of lauric acid, and wherein the fats still have appropriate melting and crystallisation behaviour for manufacturing, storage and use. Thus, the invention further relates to a creamer and/or whitener-type product comprising 10-95% wt (preferably 20-90%) of a matrix material comprising protein and carbohydrate, and 5-90% wt (preferably 10-80% wt) of fatty matter essentially dispersed in the matrix material, preferably as discrete regions or as oily or fatty matter droplets, crystals or particles, which composition is substantially free from trans-unsaturated fatty acids or triglycerides thereof. Preferably, the compositions according to the invention are substantially free from animal fat.

The invention also relates to creamers and/or whiteners comprising 10-100% of the particulates according to the invention.

The manufacturing process of the particulates according to the invention involves preparing an emulsion or dispersion of the fatty matter and the matrix material in an aqueous liquid, preferably followed by a homogenising step, followed by drying said emulsion or dispersion. Said drying is preferably done by spray-drying but other drying processes such as for example heat drying (including vacuum freeze drying), air drying etc can also be employed. The emulsion or dispersion of the fatty matter and matrix material in an aqueous liquid can be prepared by means as known in the art, e.g. high shear mixing (optionally followed by homogenising), membrane emulsification techniques, or other means.

The general conditions of a suitable process are for example disclosed in WO-A-02/17892.

The invention further relates to the use of the particulates according to the invention as creamer and/or thickener and/or whitener. Apart from free flowing particulates such creamer and/or thickener can be in the form of e.g. a cube, pellet or tablet.

The invention also relates to food compositions comprising the particulates according to the invention, such as (wet) soups and sauces and the (dry) concentrates thereof. Hence, the invention further relates to a composition comprising (weight % based on dry weight) 2-50% wt salt, 0-30% wt MSG (monosodiumglutamate), 0-50% fat and/or fatty matter, 0-20% wt herbs and/or spices, 0-30% wt vegetable particulates, 0-30% wt starch-based thickener and further comprising 0.1-65% wt (preferably 2-50% wt) of the particulates according to the invention. Such (savoury) food compositions according to the invention can be any physical format, but the invention is most suitable for (savoury) compositions that are in the wet form or in the form of pasty or particulate matter. Particulate matter is herein to be understood to comprise e.g. flakes, powder, cubes, pellets, tablets. In the case of cubes, pellets, tablets it may be needed to use a technique such as agglomerating or pressing the particulates according to the invention to obtain such shapes. Examples of such food compositions are soup- and sauce concentrates (which yield a soup or sauce upon dilution and heating with an aqueous liquid, typically cream-style soups and sauces), and the soups and sauces on their wet form. The compositions above may be in the form of flakes, granules, powder or agglomerated or e.g. pressed to a cube, pellet, or tablet. The food compositions as set out above may further comprise (e.g. in an amount of 0.1-50% wt) vegetable powder, e.g. tomato powder.

The particulates according to the invention can also be applied in liquid or pasty products (e.g. savoury products) in which a creaming effect is desired. Such liquid or pasty products usually contain some water, and when the particulates according to the invention are incorporated in such liquid or pasty products the dry particulates will generally melt and/or dissolve, and no longer be visible as such. Examples of such liquid or pasty products are wet soups and sauces, which are often pasteurised, aseptically packaged, or sterilised products (as replacer for e.g. liquid cream). Hence, the present invention further relates to a process for preparing a liquid or pasty sauce, soup or concentrate of such a sauce or soup or concentrate, which process includes the step of including 0.1-65% wt (preferably 2-50% wt) of the particulates according to the invention as set out herein in such liquid or pasty sauce, soup or concentrate of such a sauce or soup or concentrate.

The particulates according to the invention may also be used in non-savoury applications for performing a creaming and/or whitening effect, such as beverages like tea, coffee, cocoa drinks, milk shakes, milk, soymilk, dairy drinks, fruit juices, fruit smoothies, etcetera, as well as compositions for preparing these. Often, such compositions contain sugar (as that is often a preferred taste for such compositions, contrary to the savoury applications like soups and sauces as referred to above) or sweet or non-sweet starch hydrolysates or a non-sugar sweetener. The sugar, sweet or non-sweet starch hydrolysates or a non-sugar sweetener may be part of the creamer/whitener, or may be included in the formulation as such next to the creamer. Next to the creamer/whitener particles and optionally sugar (or sweet or non-sweet tasting starch hydrolysates or non-sugar sweetener) such formulation preferably contains something to give the formulations its characteristic flavour and color, such as extracts of-, flavorants and/or colorants for-, instant compositions for-, dried compositions of-: tea, coffee, cocoa, milk shakes, or milk, soymilk, dairy drinks, fruit juices, fruit smoothies, etcetera. Such non-savoury applications may be offered to the consumer in a final (wet) form ready for consumption (optionally requiring heating or cooling), or in a dry form, e.g. as instant product, further requiring dillution with an aqueous liquid (e.g, water, milk) and optional heating and/or cooling or as a separate creamer/whitener offered for use in such beverages. Thus, the invention further relates to a composition comprising (based on dry weight) 0-80% (preferably 20-70% wt) sugar and/or sweet and/or non-sweet starch hydrolysate and/or non-sugar sweetener, 0.5-80% (preferably 0.6-50% wt, more preferably 0.8-20% wt)
- tea powder, instant tea, tea flavour, tea colorant, dried tea, tea concentrate, and/or
- coffee powder, instant coffee, coffee flavour, coffee colorant, dried coffee, coffee concentrate, and/or
- cocoa powder, instant cocoa, cocoa flavour, cocoa colorant, dried cocoa, cocoa concentrate, and/or
- milkshake powder, instant milkshake, milkshake flavour, milkshake colorant, dried milkshake, milkshake concentrate, and/or
- milk powder, instant milk, milk flavour, milk colorant, dried milk, milk concentrate, and/or
- soymilk powder, instant soymilk, soymilk flavour, soymilk colorant, dried soymilk, soymilk concentrate, and/or
- dairy drink powder, instant dairy drink, diary drink flavour, dairy drink colorant, dried dairy drink, dairy drink concentrate, and/or
- fruit juice powder, instant fruit juice, fruit juice flavour, fruit juice colorant, dried fruit juice, fruit concentrate, and/or
- fruit smoothie powder, instant fruit smoothie, fruit smoothie flavour, fruit smoothie colorant, dried fruit smoothie, fruit smoothie concentrate,
and further comprising 1-75% wt (preferably 20-50% wt) of the particulates according to the invention (and as set out above).

A preferred application is creamy black tea or instant compositions for such. Thus, the invention further relates to a composition comprising (weight % based on dry weight) 30-65% wt sugar and/or sweet and/or non-sweet starch hydrolysate, 0.8-20%, more preferably 1-10% wt black tea powder and/or black tea flavour and further comprising 20-60% wt of the particulates according to the invention (and as set out above). Preferably, the composition is an instant composition, which upon dillution with water and heating gives creamy black tea.

An additional benefit of the present invention is that it allows the inclusion of phytosterols as defined above in savoury applications and non-savoury applications like beverages. Such sterols and stanols have health benefits, e.g. relating to blood cholesterol levels and/or balance. Additionally, it allows the manufacture and use of low calory and low SAFA (saturated fatty acid) whiteners/creamers. The first is due to the fact that (in case of fatty acid esters of phyto sterols and phytostanols) only the fatty acid tail contributes to the calories. As to the other mentioned advantage of low SAFA creamers/whiteners: conventional creamer/whitener particulates are prepared using hardened triglyceride fats, thus high SAFA fats. With low SAFA fats so far no proper creamer/whitener could be manufactured. When using fatty acid ester derivatives of phytosterols or phytostanols the ester can be prepared low in SAFA (and low in TFA), and still the fatty matter so prepared can have suitable melting and other behaviour to be processed into a creamer and/or whitener, and can still have suitable properties upon use (inc. consumption). Yet a further surprising benefit of the presently disclosed creamer and/or whitener is that contrary to common triglycerides, the phytosterols and their fatty acid esters as defined above are less sensitive to lipase-enzyme activities which can be present in e.g. herbs or spices or other ingredients used in savoury applications. This may result in a better flavour upon storage.

Additionally, the particulates may be used as a way to have phytosterols in formulations in which oxidation stability is a problem, as in the form of the particulates according to the invention they can be more stable against oxidation.

The particulates can be used as such (in any physical shape), as part of a dry (as defined above) composition e.g. a soup or sauce concentrate, but the particulates may also be used in liquid or pasty formulations.

As mentioned, the fatty matter in the particulates according to the invention preferably comprises 5-100% (by weight on basis of the total fatty matter) of phytosterols. Thus, the particulates according to the invention may comprise 0-95% of other fatty matter. Such other fatty matter can comprise e.g. triglycerides of fatty acids. Regarding such triglycerides, it is preferred that the triglycerides are substantially free of trans-unsaturated fatty acids, e.g. triglycerides. Preferred triglycerides are disclosed in EP-A-1,419,698. It may be preferred that of such triglycerides at least 55% wt (preferably at least 65% wt, based on the triglycerides in the particulates according to the invention) are triglycerides of fully saturated C16 and longer chains (e.g. C16, C18, C20, C22 and C24) and/or triglycerides containing one cis-unsaturated fatty acid of any chain length and two saturated fatty acids of 16 or more carbon atoms. In the particulates according to the invention it is preferred that the amount of H3 (triglyceride of 3 saturated fatty acids of 16 or more carbon atoms, e.g. C16-C24) is at least 15% wt based on the total amount of triglycerides in the particulates according to the invention, preferably at least 20%. Likewise, it is preferred that the amount of H2U (triglyceride of 2 saturated fatty acids of 16 or more carbon atoms and 1 cis-unsaturated fatty acid) taken together is at least 40% wt based on the total amount triglycerides in the particulates according to the invention. Apart from said amounts of H3 and H2U it can be preferred to use fats in such particulates in a particular ratio. In this case, the ratio H3 / H2U is preferably between 0.5 and 1.2. Regarding the basic fatty acid composition, it is preferred that the amount of H (i.e. saturated fatty acids of 16 or more carbon atoms, e.g. C16-C24) is between 60 and 75% wt based on total amount of triglycerides in the particulates according to the invention. Normally, only fatty acids are used with even number of carbon atoms. Similarly, it is preferred that the amount of U (cis-unsaturated fatty acids of any suitable chain length) is between 20 and 45% wt based on total amount of triglycerides in the particulates according to the invention. In the particulates according to the invention the amount of palmitic fatty acid (C16:0) in the triglycerides is preferably between 30 and 70%, more preferably between 40 and 60% wt based on the total amount of triglycerides in the particulates according to the invention.

### EXAMPLES

### Example 1: creamer manufacture (1)

Four different creamers were prepared, each with a different fatty matter composition. Apart from the fatty matter composition the creamers had the same composition.

| Fatty matter components | I | II | III | IV |
|---|---|---|---|---|
| Phyto sterol ester | 100 % | 25 % | 50 % | 75 % |
| Fat blend A | | 75 % | 50 % | 25 % |

The phyto sterol ester used was bean oil sterol interesterified with esters derived from sunflower oil.
Fat blend A used was a blend of 40% PO (palm oil) and 60% POs (dry fractionated palm stearin) with a melting point of approx. 53°C.
The fatty fractions were prepared by mixing the required amounts of phyto sterol ester and fat blend A and heating up 75°C in a blending vessel under nitrogen atmosphere for 10 min.

The following ingredients were used to prepare a particulate creamer, using the four different fat blends above:
5 kg water
1.5 kg fatty matter of table above
0.02 kg sodium caseinate
0.18 kg calcium caseinate
0.23 kg lactose
0.07 kg phosphate.

The processing involved the following process: all ingredients were mixed in a mixing tank with an Ultraturrax for 5 min. at 55°C and then homogenized in a homogenizer (Schroeder) at one stage, 200 bar. The resulting suspension then was spray dried in a multi stage spray dryer (Niro). The inlet temperature was about 165°C; the outlet temperature about 62°C. The dry particulate creamer was agglomerated for 5 minutes in an agglomeration process step (Glatt Agglomator, inlet temperature 80°C, outlet temperature 50°C). The spray dried and agglomerated creamer was stored under cool conditions below 20°C. In the creamer, most of the fatty matter was dispersed in the matrix material. This was confirmed by light microscopy.

### Example 2: Saffron cream soup

A dry soup mix for a saffron cream soup was made by mixing:

| | |
|---|---|
| Creamer containing fatty matter III | 32.94% |
| Heat/moisture-treated starch, dried | 15.73% |
| Skim milk powder | 21.32% |
| Xanthan | 1.12% |
| Common salt | 4.51% |
| Citric acid granular | 0.22% |
| Powdered onion and leek | 5.55% |
| Sugar | 2.50% |
| Saffron powder | 0.08% |
| Various flavourings | 16.03% |

To prepare the creamy saffron soup 40g of this dry mixture was stirred into 200ml cold water, mixed and briefly brought to the boil. A creamy saffron soup with good mouthfeel was the result.

### Example 3: Cream-style sauce

A dry sauce mixture for a cream-style sauce was made by mixing:

| | |
|---|---|
| Creamer containing fatty matter III | 26.00% |
| Waxy corn starch, dried | 25.91 % |
| Lactose | 7.97% |
| Common salt | 8.09% |
| Roux white 14.39% | |
| Champignon extract powder | 2.77% |
| Powdered onion | 5.18% |
| Sugar | 1.43% |
| Various flavourings | 8.26% |

To prepare the creamy sauce 40g of this dry mixture was stirred into 200ml cold water, mixed and briefly brought to the boil. A creamy sauce with good mouthfeel was the result.

### Example 4: Mushroom cream soup

A dry soup mix for a mushroom cream soup can be made by mixing:

| | |
|---|---|
| Creamer containing fatty matter III | 28.40% |
| Heat/moisture-treated starch, dried | 14.76% |
| Skim milk powder | 22.14% |
| Xanthan | 1.05% |
| Common salt | 4.22% |
| Citric acid granular | 0.40% |
| Powdered onion and leek | 5.18% |
| Sugar | 1.10% |
| Powdered mushrooms and ceps | 14.49% |
| Various flavourings | 8.26% |

To prepare the creamy mushroom soup 40g of this dry mixture can be stirred into 200ml cold water, mixed and briefly boiled.

### Example 5: Tomato cream sauce

A dry sauce mixture for a creamy tomato sauce can be made by mixing:

| | |
|---|---|
| Creamer containing fatty matter III | 28.40% |
| Heat/moisture-treated starch, dried | 14.76% |
| Tomato powder | 36.63% |
| Xanthan | 1.05% |
| Common salt | 4.22% |
| Citric acid granular | 0.40% |
| Powdered onion and leek | 5.18% |
| Sugar | 1.10% |
| Various flavourings | 8.26% |

To prepare the creamy tomato sauce 40g of this dry mixture can be stirred into 200ml cold water, mixed and briefly boiled.

### Example 6: leek cream-style sauce

A dry sauce mixture for a leek cream-style sauce was made by mixing:

| | |
|---|---|
| Creamer containing fatty matter III | 28.40% |
| Heat/moisture-treated starch, dried | 14.76% |
| Leek powder | 36.63% |
| Xanthan | 1.05% |
| Common salt | 4.22% |
| Citric acid granular | 0.40% |
| Powdered onion and leek | 5.18% |
| Sugar | 1.10% |
| Various flavourings | 8.26% |

To prepare the creamy tomato sauce 40g of this dry mixture can be stirred into 200ml cold water, mixed and briefly boiled.

### Example 7: creamer manufacture (2)

Two different creamers were prepared according to the following composition.

| | Sample 1 (% wt) | Sample 2 (% wt) |
|---|---|---|
| Plant sterol ester | 30 | 30 |
| Vegetable fat | 30 | 30 |
| Lactose | 15 | 15 |
| Glucose syrup | 15 | 0 |
| Maltodextrine | 0 | 15 |
| Sodium caseinate | 1 | 1 |
| Calcium caseinate | 7 | 7 |
| Phosphate | 2 | 2 |

The plant sterol ester used was bean oil sterol interesterified with esters derived from sunflower oil.
The vegetable fat used was a blend of 40% PO (palm oil) and 60% POs (dry fractionated palm stearin) with a melting point of approx. 53°C.
The fatty fractions were prepared by mixing the required amounts and heating up 75°C in a blending vessel under nitrogen atmosphere for 10 min.

The processing involved the following process: all ingredients were mixed in a mixing tank with water (2 kg fat and carrier per 5 kg water) with an Ultraturrax for 5 min. at 55°C and then homogenized in a homogenizer (Schroeder) at one stage, 200 bar. The resulting suspension then was spray dried in a multi stage spray dryer (Niro). The inlet temperature was about 165°C; the outlet temperature about 62°C. The dry particulate creamer was agglomerated for 5 minutes in an agglomeration process step (Glatt Agglomator, inlet temperature 80°C, outlet temperature 50°C). The spray dried and agglomerated creamer was stored under cool conditions below 20°C. In the creamer, most of the fatty matter was dispersed in the matrix material. This was confirmed by light microscopy

### Example 8: cream milk tea

An instant composition for a sweet creamy milk tea can be made by mixing:

| | |
|---|---|
| Creamer (sample 1 from example 7) | 42 % |
| Sugar | 52 % |
| Black tea powder | 5 % |
| Black tea flavour | 1 % |

To prepare the sweet creamy milk tea 16.5 g of this dry mixture can be stirred into 150ml hot water and mixed. Sample 2 of example 7 could be used with similar results.

### Example 9

### Milk beverage with creamer

A milk beverage with the following composition was prepared (wt%)

| | |
|---|---|
| semi skimmed pasteurised milk | 95 % |
| kappa/iota carrageenan | 0.015 % |
| saturated monoglycerides | 0.05 % |
| creamer containing sterolesters (sample.2 example 7) | 1.5 % |
| water | up to 100 wt% |

All ingredients were added to the semi skimmed milk at 50 °C under agitation, and mixed for 10 minutes. The milk with all the ingredients was subsequently transferred to the premix vessel of the UHT processing line. The mixture was preheated to 70 °C and ultra high temperature treated at 140°C for 8 seconds by steam injection, then cooled to 70 °C, and homogenised at this temperature at about 200 bar. The milk was cooled to 15 to 20 °C and aseptically filled in aseptic tetrapaks^{™} and stored at ambient temperature (20 to 25 °C). According to a panel the obtained milk was good, and it was stable after storage for 12 weeks.

## Claims

1. Particulates comprising 10-95% wt of a matrix material and 5-90% wt of fatty matter essentially dispersed in the matrix material, wherein said fatty matter comprises 5-100% wt on fatty matter of one or more of phytosterols, and wherein the matrix comprises a protein and a carbohydrate, and wherein the amount of phytosterols is at least 1 wt% on the total weight of the particulates.

2. Particulates according to claim 1, wherein the phytosterols comprise fatty acid esters of sterols.

3. Particulates according to claim 1-2, wherein the fatty matter is dispersed in the matrix material as discrete regions.

4. Particulates according to claim 1-3, wherein the fatty matter is dispersed in the matrix material as oily or fatty matter droplets, crystals or particles.

5. Particulates according to claim 1, wherein the protein comprises a dairy protein, hydrolysed protein, gelatin, soy protein, or mixtures thereof.

6. Particulates according to claim 1, wherein the carbohydrate comprises maltodextrin, sugar, sugar derivative, starch, flour, chemically modified starch, physically modified starch, xanthan, guar, locust bean gum, alginate, pectin, carrageenan, polydextrose, or mixtures thereof.

7. Particulates according to claim 1-6, wherein the matrix material comprises dairy products like liquid and/or powdered (skim) milk or cream.

8. Particulates according to claim 1-7, wherein at least 60% by weight of the particulates has a size of 1-1000 µm.

9. Particulates according to claim 4-8, wherein at least 60% by weight of the oily or fatty matter droplets, crystals or particles has a size of 0.05-100 µm.

10. Particulates according to claim 1-9, containing less than 30% wt of water.

11. Creamer or whitener comprising 10-100% of the particulates according to any of claims 1-10.

12. Food product comprising the creamer or whitener composition according to claim 11.

13. Composition comprising (weight % based on dry weight) 2-50% wt salt, 0-30% wt MSG, 0-50% fat and/or fatty matter, 0-20% wt herbs and/or spices, 0-30% wt vegetable particulates, 0-30% wt starch-based thickener and further comprising 0.1-65% wt (preferably 2-50% wt) of the particulates according to any of claims 1-10.

14. Food product according to claim 12, which is a soup- or sauce concentrate.

15. Composition comprising (weight % on dry weight) 0-80% sugar and/or sweet and/or non-sweet starch hydrolysate and/or non-sugar sweetener, 0.5-80%
- tea powder, instant tea, tea flavour, tea colorant, dried tea, tea concentrate, and/or
- coffee powder, instant coffee, coffee flavour, coffee colorant, dried coffee, coffee concentrate, and/or
- cocoa powder, instant cocoa, cocoa flavour, cocoa colorant, dried cocoa, cocoa concentrate, and/or
- milkshake powder, instant milkshake, milkshake flavour, milkshake colorant, dried milkshake, milkshake concentrate, and/or
- milk powder, instant milk, milk flavour, milk colorant, dried milk, milk concentrate, and/or
- soymilk powder, instant soymilk, soymilk flavour, soymilk colorant, dried soymilk, soymilk concentrate, and/or
- dairy drink powder, instant dairy drink, diary drink flavour, dairy drink colorant, dried dairy drink, dairy drink concentrate, and/or
- fruit juice powder, instant fruit juice, fruit juice flavour, fruit juice colorant, dried fruit juice, fruit concentrate, and/or
- fruit smoothie powder, instant fruit smoothie, fruit smoothie flavour, fruit smoothie colorant, dried fruit smoothie, fruit smoothie concentrate,
and further comprising 1-75% wt of the particulates according to claim 1-10.

16. Composition according to claim 15, comprising 30-65% wt sugar or sweet starch hydrolysate, 0.8-20 % wt black tea powder and/or black tea flavour and further comprising 20-60% wt of the particulates according to any of claims 1-10.

17. Process for manufacturing the particulates according to any of claims 1-10, comprising the steps of:
- preparing an emulsion or dispersion of the fatty matter and matrix material in an aqueous liquid
- drying said emulsion or dispersion.

18. Process according to claim 16, further comprising a homogenising step prior to the drying of the emulsion or dispersion.

19. Process for preparing a liquid or pasty sauce, soup or concentrate of such a sauce or soup, which process includes the step of including 0.1-65% wt of the particulates according to any of claims 1-10 in such liquid or pasty sauce, soup or concentrate of such a sauce or soup.

## Patentansprüche

1. Teilchenförmiges Produkt, das 10-95 Gewichts-% eines Matrixmaterials und 5-90 Gewichts-% fetthaltiges Material, das im Wesentlichen in dem Matrixmaterial dispergiert ist, umfasst, wobei das fetthaltige Material 5-100 Gewichts-%, bezogen auf das Fett, eines Phytosterols oder mehrerer Phytosterole umfasst und wobei die Matrix ein Protein und ein Kohlenhydrat umfasst und wobei die Menge an Phytosterolen wenigstens 1 Gewichts-%, bezogen auf das teilchenförmige Produkt, beträgt.

2. Teilchenförmiges Produkt nach Anspruch 1, wobei die Phytosterole Fettsäureester von Sterolen umfassen.

3. Teilchenförmiges Produkt nach Anspruch 1-2, wobei das fetthaltige Material als diskrete Bereiche in der Matrix dispergiert ist.

4. Teilchenförmiges Produkt nach Anspruch 1-3, wobei das fetthaltige Material in der Matrix als Tröpfchen, Kristalle oder Partikel aus ölhaltigem oder fetthaltigem Material dispergiert ist.

5. Teilchenförmiges Produkt nach Anspruch 1, wobei das Protein Milchprotein, hydrolysiertes Protein, Gelatine, Sojaprotein oder Gemische davon umfasst.

6. Teilchenförmiges Produkt nach Anspruch 1, wobei das Kohlenhydrat Maltodextrin, Zucker, Zuckerderivat, Stärke, Mehl, chemisch modifizierte Stärke, physikalisch modifizierte Stärke, Xanthan, Guar, Johannisbrotgummi, Alginat, Pektin, Carrageenan, Polydextrose oder Gemische davon umfasst.

7. Teilchenförmiges Produkt nach Anspruch 1-6, wobei das Matrixmaterial Milchprodukte wie flüssige und/oder pulverförmige (Mager-)Milch oder Sahne umfasst.

8. Teilchenförmiges Produkt nach Anspruch 1-7, wobei wenigstens 60 Gewichts-% des teilchenförmigen Produkts eine Größe von 1-1000 µm haben.

9. Teilchenförmiges Produkt nach Anspruch 4-8, wobei wenigstens 60 Gewichts-% der Tröpfchen, Kristalle oder Partikel aus ölhaltigem oder fetthaltigem Material eine Größe von 0,05-100 µm haben.

10. Teilchenförmiges Produkt nach Anspruch 1-9, das weniger als 30 Gewichts-% Wasser enthält.

11. Creamer oder Weissmittel, umfassend 10-100 % des teilchenförmigen Produkts nach einem der Ansprüche 1-10.

12. Nahrungsmittelprodukt, das die Creamer- oder Weissmittel-Zusammensetzung nach Anspruch 11 umfasst.

13. Zusammensetzung, umfassend (Gewichts-%, bezogen auf Trockengewicht) 2-50 Gewichts-% Salz, 0-30 Gewichts-% MSG (Mononatriumglutamat), 0-50 Gewichts-% Fett und/oder fetthaltiges Material, 0-20 Gewichts-% Kräuter und/oder Gewürze, 0-30 Gewichts-% pflanzliches teilchenförmiges Material, 0-30 Gewichts-% Verdickungsmittel auf Stärkebasis und außerdem umfassend 0,1-65 Gewichts-% (vorzugsweise 2-50 Gewichts-%) des teilchenförmigen Produktes nach einem der Ansprüche 1-10.

14. Nahrungsmittelprodukt nach Anspruch 12, das ein Suppen- oder Soßen-Konzentrat ist.

15. Zusammensetzung, umfassend (Gewichts-%, bezogen auf das Trockengewicht) 0-80 Gewichts-% Zucker und/oder süßes und/oder nicht-süßes Stärkehydrolysat und/oder Nicht-Zucker-Süßungsmittel, 0,5-80 Gewichts-%
- Teepulver, Instant-Tee, Tee-Aroma, Teefärbemittel, getrockneten Tee, Teekonzentrat und/oder
- Kaffeepulver, Instant-Kaffee, Kaffee-Aroma, Kaffeefärbemittel, getrockneter Kaffee, Kaffeekonzentrat und/oder
- Kakaopulver, Instant-Kakao, Kakao-Aroma, Kakaofärbemittel, getrockneter Kakao, Kakaokonzentrat und/oder
- Milchshake-Pulver, Instant-Milchshake, Milchshake-Aroma, Milchshake-Färbemittel, getrockneter Milchshake, Milchshake-Konzentrat und/oder
- Milchpulver, Instant-Milch, Milch-Aroma, Milchfärbemittel, getrocknete Milch, Milchkonzentrat und/oder
- Sojamilchpulver, Instant-Sojamilch, Sojamilch-Aroma, Sojamilchfärbemittel, getrocknete Sojamilch, Sojamilchkonzentrat und/oder
- Milchgetränkpulver, Instant-Milchgetränk, Milchgetränk-Aroma, Milchgetränkfärbemittel, getrocknetes Milchgetränk, Milchgetränkkonzentrat und/oder
- Fruchtsaftpulver, Instant-Fruchtsaft, Fruchtsaft-Aroma, Fruchtsaftfärbemittel, getrockneter Fruchtsaft, Fruchtkonzentrat und/oder
- Frucht-Smoothie-Pulver, Instant-Frucht-Smoothie, Frucht-Smoothie-Aroma, Frucht-Smoothie-Färbemittel, getrockneter Frucht-Smoothie, Frucht-Smoothie-Konzentrat
und außerdem umfassend 1-75 Gewichts-% des teilchenförmigen Produkts nach Anspruch 1-10.

16. Zusammensetzung nach Anspruch 15, umfassend 30-65 Gewichts-% Zucker oder süßes Stärkehydrolysat, 0,8-20 Gewichts-% schwarzer Tee-Pulver und/oder schwarzer Tee-Aroma und außerdem umfassend 20-60 Gewichts-% des teilchenförmigen Produkts nach einem der Ansprüche 1-10.

17. Verfahren zur Herstellung des teilchenförmigen Produkts nach einem der Ansprüche 1-10, umfassend die Schritte:
- Herstellung einer Emulsion oder Dispersion des fetthaltigen Materials und Matrixmaterials in einer wässrigen Flüssigkeit,
- Trocknung der Emulsion oder Dispersion.

18. Verfahren nach Anspruch 16, das außerdem einen Homogenisierungsschritt vor der Trocknung der Emulsion oder Dispersion umfasst.

19. Verfahren zur Herstellung einer flüssigen oder pastösen Soße, Suppe oder eines Konzentrat einer solchen Soße oder Suppe, wobei das Verfahren den Schritt des Einschließens von 0,1-65 Gewichts-% des teilchenförmigen Produkts nach einem der Ansprüche 1-10 in einer solchen flüssigen oder pastösen Soße, Suppe oder einem Konzentrat einer solchen Soße oder Suppe umfasst.

## Revendications

1. Particules comprenant 10 à 95 % en poids d'un matériau de matrice et 5 à 90 % en poids de matières grasses essentiellement dispersées dans le matériau de matrice, lesdites matières grasses comprenant 5 à 100 % en poids de matières grasses d'un ou de plusieurs phytostérols, et la matrice comprenant une protéine et un glucide, et la quantité de phytostérols étant d'au moins 1 % en poids du poids total des particules.

2. Particules selon la revendication 1, dans lesquelles les phytostérols comprennent des esters d'acide gras de stérols.

3. Particules selon la revendications 1 ou 2, dans lesquelles les matières grasses sont dispersées dans le matériau de matrice sous forme de régions séparées.

4. Particules selon l'une des revendications 1 à 3, dans lesquelles les matières grasses sont dispersées dans le matériau de matrice sous forme de gouttelettes huileuses ou de matières grasses, de cristaux ou de particules.

5. Particules selon la revendication 1, dans lesquelles la protéine comprend une protéine du lait, une protéine hydrolysée, la gélatine, une protéine de soja ou leurs mélanges.

6. Particules selon la revendication 1, dans lesquelles le glucide comprend la maltodextrine, le sucre, un dérivé du sucre, l'amidon, la farine, l'amidon modifié chimiquement, l'amidon modifié physiquement, le xanthane, la gomme guar, la gomme de caroube, l'alginate, la pectine, la carraghénine, le polydextrose ou leurs mélanges.

7. Particules selon l'une des revendications 1 à 6, dans lesquelles le matériau de matrice comprend des produits laitiers tels que le lait (écrémé) liquide et/ou en poudre ou la crème.

8. Particules selon l'une des revendications 1 à 7, dans lesquelles au moins 60 % en poids des particules ont une taille de 1 à 1000 µm.

9. Particules selon l'une des revendications 4 à 8, dans lesquelles au moins 60 % en poids des gouttelettes huileuses ou de matières grasses, des cristaux ou des particules ont une taille de 0,05 à 100 µm.

10. Particules selon l'une des revendications 1 à 9, contenant moins de 30 % en poids d'eau.

11. Composition crémeuse ou blanchissante comprenant 10 à 100 % des particules selon l'une quelconque des revendications 1 à 10.

12. Produit alimentaire comprenant la composition crémeuse ou blanchissante selon la revendication 11.

13. Composition comprenant (sur la base en poids du poids sec), 2 à 50 % en poids de sel, 0 à 30 % en poids de MSG, 0 à 50 % de graisses et/ou de matières grasses, 0 à 20 % en poids d'herbes aromatiques et/ou d'épices, 0 à 30 % en poids de particules de légumes, 0 à 30 % en poids d'épaississant à base d'amidon et comprenant en outre 0,1 à 65 % en poids (de préférence, 2 à 50 % en poids) de particules selon l'une quelconque des revendications 1 à 10.

14. Produit alimentaire selon la revendication 12, qui est un concentré pour soupe ou sauce.

15. Composition comprenant (en % en poids sur la base du poids sec), 0 à 80 % de sucre et/ou d'hydrolysat d'amidon sucré et/ou non sucré et/ou un édulcorant non sucré, 0,5 à 80 % de
► poudre de thé, thé soluble, arôme de thé, colorant de thé, thé sec, concentré de thé et/ou
► poudre de café, café soluble, arôme de café, colorant de café, café sec, concentré de café et/ou
► poudre de cacao, cacao soluble, arôme de cacao, colorant de cacao, cacao sec, concentré de cacao, et/ou
► poudre de lait fouetté, lait fouetté soluble, arôme de lait fouetté, colorant de lait fouetté, lait fouetté sec, concentré de lait fouetté, et/ou
► poudre de lait, lait soluble, arôme de lait, colorant de lait, lait sec, concentré de lait et/ou
► poudre de soja, soja soluble, arôme de soja, colorant de soja, soja sec, concentré de soja, et/ou
► poudre de boisson lactée, boisson lactée soluble, arôme de boisson lactée, colorant de boisson lactée, boisson lactée sèche, concentré de boisson lactée, et/ou
► poudre de jus de fruit, jus de fruit soluble, arôme de jus de fruit, colorant de jus de fruit, jus de fruit sec, concentré de jus de fruit et/ou
► poudre de yaourt fouetté aux fruits, yaourt fouetté aux fruits soluble, arôme de yaourt fouetté aux fruits, colorant de yaourt fouetté aux fruits, yaourt fouetté aux fruits sec, concentré de yaourt fouetté aux fruits,
et comprenant en outre 1 à 75 % en poids de particules selon l'une des revendications 1 à 10.

16. Composition selon la revendication 15, comprenant 30 à 65 % en poids de sucre ou d'hydrolysat d'amidon sucré, 0,8 à 20 % en poids de poudre de thé noir et/ou d'arôme de thé noir et comprenant en outre 20 à 60 % en poids de particules selon l'une quelconque des revendications 1 à 10.

17. Procédé de production de particules selon l'une quelconque des revendications 1 à 10, comprenant les étapes consistant à :
► préparer une émulsion ou une dispersion de matières grasses et de matériau de matrice dans un liquide aqueux
► sécher ladite émulsion ou dispersion.

18. Procédé selon la revendication 16, comprenant en outre une étape d'homogénéisation avant le séchage de l'émulsion ou de la dispersion.

19. Procédé de préparation d'un liquide ou d'une sauce pâteuse, d'une soupe ou d'un concentré de cette sauce ou cette soupe, ledit procédé comprenant l'étape consistant à inclure 0,1 à 65 % en poids des particules selon l'une quelconque des revendications 1 à 10 dans ce liquide ou cette sauce pâteuse, cette soupe ou concentré de cette sauce ou soupe.
